# FASCICULE DE BREVET EUROPEEN

(11) **EP 2 923 125 B1**
(45) Date de publication et mention de la délivrance du brevet: **19.08.2020**
(21) Numéro de dépôt: 13828814.7
(22) Date de dépôt: 25.11.2013
(51) Int. Cl.: F16K 31/04

(54) **VANNE MOTORISÉE A FERMETURE ASSISTÉE**
VENTIL MIT MOTORISIERTER SCHLIESSUNG
VALVE WITH MOTORISED CLOSURE

(30) Priorité: 26.11.2012 FR 1261251
(43) Date de publication de la demande: 30.09.2015
(73) Titulaire: ASCO SAS, 28110 Lucé (FR)
(72) Inventeur: SOBRINO, Cécilio, F-37270 Montlouis (FR); MOREAU, Pascal, F-28630 Le Coudray (FR)
(74) Mandataire: Nony
(86) Numéro de dépôt international: PCT/IB2013/060388
(87) Numéro de publication internationale: WO 2014/080374

(56) Documents cités:
- EP-A2- 0 306 159
- EP-A2- 1 445 523
- DE-A1- 10 248 616
- DE-A1- 19 624 901
- US-A1- 2004 004 201
- US-A1- 2005 199 847

## Description

La présente invention concerne les vannes motorisées et notamment celles destinées aux circuits dans lesquels circulent des fluides tels que des liquides ou des gaz, et de préférence des liquides.

Le brevet EP 1 445 523 concerne une vanne motorisée pour la régulation du flux d'un gaz combustible. Cette vanne comprend un ressort qui assiste la fermeture d'un clapet contre le siège de la vanne. Dans la position fermée de ce dispositif, le clapet ne repose pas sur un siège contre la pression du fluide : la pression du fluide va dans le sens de la fermeture du clapet.

La demande de brevet allemand DE 102 48 616 concerne une vanne comportant un clapet venant en butée contre un siège dont la fermeture est assistée par un ressort. Le clapet ne repose pas sur un siège contre la pression d'un fluide en position fermée.

Le brevet EP 0 306 159 concerne une vanne motorisée pour contrôler un flux d'eau, arrivant par une entrée et comporte également un clapet venant en butée contre un siège dont la fermeture est assistée par un ressort. Le clapet ne repose pas sur un siège contre la pression de l'eau en position fermée.

La demande de brevet US 2004/004201 concerne une vanne motorisée comportant un détecteur et dont la fermeture du clapet est assistée par un ressort.

La demande de brevet américain US 2005/199847 concerne une vanne motorisée par un moteur à courant continu, permettant de réguler un flux de gaz.

DE 196 24 901 concerne également une vanne destinée à réguler un flux de gaz d'échappement d'un moteur de véhicule.

La demande FR 2 878 927 divulgue une vanne motorisée comportant un moteur pas à pas entraînant en déplacement un clapet entre des positions ouverte et fermée.

Pour atteindre la position fermée, le moteur doit vaincre la pression exercée par le fluide sur le clapet ; le moteur doit être de puissance compatible avec la force à exercer, ce qui se répercute sur l'encombrement et la consommation électrique.

Il est connu par ailleurs d'équiper les vannes motorisées d'un indicateur lumineux d'état.

Or, dans certaines configurations d'utilisation de la vanne, un tel indicateur peut devenir peu ou pas visible, ce qui peut rendre la maintenance plus difficile. Afin d'accroître la visibilité de l'indicateur, celui-ci est souvent disposé de façon proéminente et centrale sur le dessus de la tête de la vanne, ce qui empêche d'y placer un connecteur d'alimentation électrique et peut rendre plus difficile le raccordement de la vanne dans certains environnements d'utilisation.

Certaines vannes connues présentent des bornes de connexion électrique sur le côté. Or, l'orientation de celles-ci, donnée par les canalisations auxquelles la vanne est raccordée, n'est pas toujours optimale vis-à-vis de la provenance des câbles de raccordement électrique.

Il existe un besoin pour perfectionner encore les vannes motorisées, afin notamment de bénéficier d'une vanne d'encombrement réduit, de fonctionnement fiable, économe en énergie, pratique à installer et de maintenance aisée.

Selon un premier de ses aspects, l'invention a pour objet une vanne motorisée selon la revendication 1, comportant une tige d'actionnement entraînée par un moteur électrique et reliée à un clapet mobile pouvant prendre une position ouverte et une position fermée où le clapet repose sur un siège contre la pression d'un fluide, qui se caractérise par le fait que le clapet est sollicité contre son siège par au moins un organe de rappel élastique pré-contraint, d'assistance à la fermeture, notamment pour contrer un effet de type Joukovsky.

Cet aspect de l'invention permet de réduire la puissance électrique du moteur en diminuant la force à exercer par le moteur pour amener le clapet en position fermée et vaincre la force exercée sur le clapet par le fluide. Le moteur est dimensionné de façon à pouvoir vaincre l'effort de rappel exercé par le ou les organes de rappel élastique quand le clapet est amené de la position de fermeture à la position ouverte, le moteur étant alors aidé par la pression du fluide. Ainsi, la puissance du moteur peut être diminuée et la taille du moteur réduite, ce qui permet de gagner en compacité. La puissance électrique du moteur étant réduite, la consommation électrique peut être abaissée.

Le moteur est de préférence un moteur « pas-à-pas », plutôt qu'un moteur conventionnel DC (courant continu de type « brushed motor »).

Dans un exemple de réalisation, un ressort hélicoïdal constituant un premier organe de rappel élastique est disposé autour de la tige d'actionnement, pour solliciter le clapet dans sa position fermée. Un deuxième ressort, coaxial au premier, disposé à l'intérieur de celui-ci, peut venir ajouter une force supplémentaire de rappel. Ce deuxième ressort peut être hélicoïdal et de pente inverse au premier, pour éviter le risque d'imbrication des ressorts. Les deux ressorts peuvent avoir même longueur lorsqu'en place dans la vanne.

Le ou les ressorts sont avantageusement situés en dehors de la veine fluide afin de ne pas être contraint sur le choix de leur matière et/ou de leur traitement de surface par la nature du fluide. Cela permet également de réduire les zones de rétention de fluide. Le clapet peut porter un ou plusieurs joints qui s'appliquent sur une surface correspondante en regard du corps de vanne pour éviter une remontée du fluide vers le ou les organes de rappel élastique d'assistance à la fermeture. Le clapet peut comporter une portion supérieure, métallique portant un joint torique et un joint à lèvre, et de préférence également un segment de guidage

Selon l'invention, la vanne, qui présente une tête logeant le moteur électrique d'actionnement du clapet, se caractérise par le fait que la tête est rotative par rapport au corps de vanne.

Cela permet d'orienter la tête relativement au corps de vanne de la manière la plus pratique pour le branchement d'un connecteur électrique sur la vanne, ce qui peut simplifier l'installation et la maintenance.

La vanne peut notamment comporter des bornes de connexion électrique sur le dessus.

La tête peut loger une carte électronique de commande du moteur, et les bornes de connexion sont avantageusement portées par cette carte, ce qui permet de gagner en compacité et simplifier la fabrication de la vanne.

Un élément élastiquement déformable est avantageusement disposé de façon à être sollicité en déformation lorsque le clapet vient en butée contre un siège de la vanne. Cela permet de maintenir l'appui du clapet contre son siège même en cas de variations de température entraînant des dilatations des éléments constitutifs de la vanne. Cela permet en outre de fixer rigidement le moteur sur un socle qui le supporte et d'éviter l'utilisation de rondelles en élastomère, susceptibles de subir une dégradation de leurs performances avec le temps.

De préférence, cet élément élastiquement déformable est disposé de façon à retenir axialement la tête sur le corps tout en lui permettant de tourner relativement au corps. Il assure ainsi une double fonction, de compensation des dilatations thermiques et de guidage du mouvement de la tête relativement au corps. Il permet également une fixation rigide du moteur sur le socle.

L'élément élastiquement déformable peut être une rondelle formant ressort, par exemple de type Belleville, engagée autour du corps de vanne, étant par exemple retenue dans une gorge de celui-ci.

La vanne peut être à deux voies seulement, ou à trois voies.

Selon un autre de ses aspects, l'invention a pour objet un dispositif électromécanique, tel qu'une vanne telle que définie ci-dessus, à relier à au moins une canalisation pneumatique ou hydraulique, qui se caractérise par le fait qu'il comporte plusieurs indicateurs lumineux d'état de fonctionnement disposés à distance les uns des autres et délivrant la même information.

La présence de plusieurs indicateurs permet d'accroître leur visibilité car les chances que l'un d'entre eux reste visible dans l'environnement final d'utilisation du dispositif sont accrues.

Cet aspect de l'invention permet d'éviter l'indicateur central unique positionné sur le dessus des vannes connues et d'utiliser cet emplacement pour y disposer un connecteur, dont les broches peuvent avantageusement être portées par une carte électronique de commande du moteur, comme mentionné plus haut.

Dans un exemple de mise en œuvre, les indicateurs lumineux sont au nombre de trois et disposés sensiblement à 120° environ les uns des autres autour d'un axe du dispositif, qui peut être l'axe de rotation de la tête de vanne.

Les indicateurs lumineux peuvent être des diodes électroluminescentes, notamment bicolores. Ces indicateurs lumineux peuvent être reliés électriquement en parallèle.

Le dispositif peut comporter un capot en une matière non opaque, à travers laquelle la lumière émise par les indicateurs lumineux peut être perçue.

Le dispositif étant une vanne motorisée dont la tête est rotative, la présence de plusieurs indicateurs lumineux est d'autant plus utile que la possibilité de rotation de la tête relativement au corps de vanne accroît le risque de non visibilité d'un indicateur unique qui ne serait pas situé sur l'axe de rotation et sur le dessus de la tête.

L'invention permet en outre d'orienter l'émission lumineuse dans une direction radiale vers l'extérieur, avec un axe d'émission par exemple perpendiculaire à l'axe de déplacement du clapet, qui peut être confondu avec l'axe de rotation quand la tête est rotative.

L'invention permet un procédé de contrôle de la circulation d'un fluide, notamment d'un liquide, dans lequel on utilise une vanne selon l'invention, réalisée conformément à l'un des aspects de l'invention définis ci-dessus.

L'invention pourra être mieux comprise à la lecture de la description détaillée qui va suivre, d'un exemple de mise en œuvre non limitatif de celle-ci, et à l'examen du dessin annexé, sur lequel :

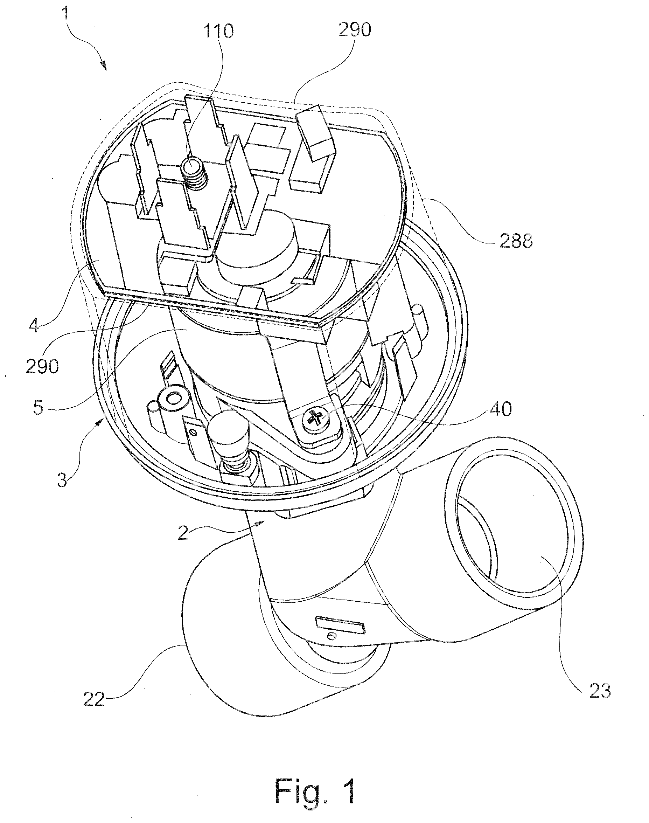

- la figure 1 représente en perspective un exemple de vanne motorisée selon l'invention,
- la figure 2 est coupe longitudinale schématique de la vanne de la figure 1, et
- la figure 3 représente, en vue de dessus, la carte électronique.

La vanne motorisée 1 selon l'invention, représentée sur les figures, comporte un corps de vanne 2 et une tête 3 logeant un moteur électrique 5 et une carte électronique 4.

Le moteur 5 est de préférence un moteur pas à pas mais l'invention n'est pas limitée à un type de moteur particulier et celui-ci pourrait être de type brushless ou à courant continu.

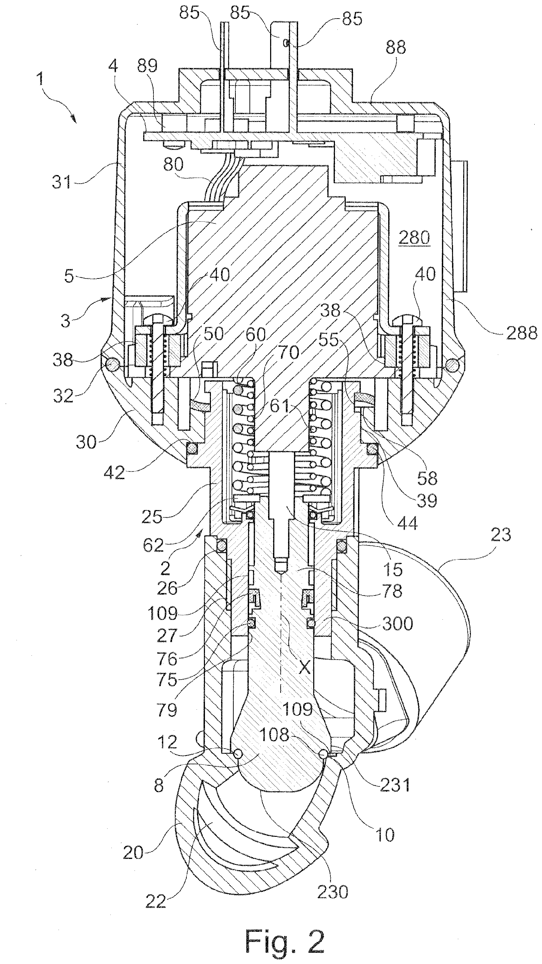

La vanne 1 comporte un clapet 8, visible sur la figure 2, mobile selon un axe X, entre une position fermée où le clapet 8 est appliqué contre un siège 10, comme illustré, et une position ouverte (non représentée) où le clapet 8 est éloigné de son siège 10.

Dans l'exemple illustré, la vanne 1 est à deux voies mais l'invention s'applique également à une vanne à trois voies.

La vanne 1 peut être à commande en tout ou rien ou à commande progressive, selon par exemple la programmation de la carte électronique 4.

Le clapet 8 est de préférence réalisé en métal et porte un joint d'étanchéité 12, constitué par exemple comme illustré par un joint torique, s'appliquant sur le siège 10 en position fermée du clapet 8.

Le joint 12 est logé dans une gorge annulaire 108 et vient axialement en appui sur un épaulement 109 du clapet 8.

La face d'extrémité 230 du clapet 8 peut être plane ou convexe vers l'extérieur, comme illustré. La surface 231 du clapet 8 au-dessus de l'épaulement 109 peut être cylindrique de révolution puis conique convergeant en éloignement du joint 108, puis à nouveau cylindrique.

Le clapet 8 est relié à une tige d'actionnement 15, par exemple métallique, entraînée en translation selon l'axe X par le moteur 5. La tige 15 est de préférence vissée dans le clapet 8, comme illustré.

Le corps de vanne 2 peut être réalisé, comme illustré, avec une partie de base 20, métallique, qui définit les entrée 22 et sortie 23 de la vanne 1 et le siège 10 du clapet 8, et une partie supérieure 25 de préférence en matière plastique, qui est par exemple vissée en 27 dans la partie de base 20 avec interposition d'un joint 26.

La tête 3 est réalisé avec un socle 30 et un capot 31 qui est fixé sur le socle 30 par exemple par vissage, avec de préférence, comme illustré, interposition d'un joint 32.

Le socle 30 et la partie supérieure 25 sont par exemple réalisés dans la même matière.

Le moteur 5 est fixé sur le socle 30 par des vis 40 avec interposition de rondelles 38 formant entretoises, rigides.

Le socle 30 présente une ouverture centrale 39, d'axe X, avec un épaulement 42 contre lequel peut s'appliquer un joint d'étanchéité 44 monté sur la partie supérieure 25 du capot 2. Le socle 30 est mobile selon l'axe X relativement à la partie supérieure 25, vers le haut sur la figure 2, c'est-à-dire en éloignement de la partie de base 20.

Un élément élastiquement déformable 50 est disposé de façon à pouvoir être sollicité en déformation par un déplacement selon l'axe X du socle 30, relativement à la partie supérieure 25 du corps 2.

L'élément 50 se présente dans l'exemple considéré sous la forme d'une rondelle métallique élastique de type rondelle Belleville, retenue axialement dans une gorge 55 de la partie supérieure 25 et venant en appui sur le rebord annulaire 58 de l'ouverture 39 du socle 30. Cette rondelle 50 peut être fendue de façon à pouvoir être ouverte par déformation élastique pour son introduction dans la gorge 55, lors de la fabrication de la vanne.

Quand le clapet 8 est poussé contre son siège 10 par le moteur 5, ce dernier tend, par réaction, à entraîner le socle 30 vers le haut sur la figure 2 et à comprimer l'élément 5. Si pour des raisons de dilatation thermique par exemple, le siège 10 tend à s'éloigner du joint 12, l'élément 50 tend, du fait de l'énergie élastique emmagasinée, à ramener le clapet 8 contre son siège 10.

Le socle 30 peut tourner librement autour de l'axe X relativement à la partie supérieure 25. L'élément 50 assure la retenue axiale du socle 30 sur cette partie supérieure 25.

Pour diminuer l'effort que doit exercer le moteur 5 pour fermer la vanne 1, le clapet 8 est sollicité en direction de son siège 10 par deux ressorts hélicoïdaux 60 et 61, coaxiaux d'axe X, et de sens d'enroulement contraires, de façon à limiter le risque d'imbrication des spires.

Les deux ressorts 60 et 61 appuient à leur extrémité inférieure contre une rondelle 62 montée sur le clapet 8 et à leur extrémité supérieure contre le moteur 5.

Les deux ressorts 60 et 61 sont comprimés au montage de telle sorte qu'ils exercent une poussée sur le clapet 8 en direction de son siège 10, lorsque le clapet 8 repose contre le siège 10.

Ainsi, quand le moteur 5 déplace le clapet 8 pour fermer la vanne 1, le mouvement du clapet 8 est assisté par les ressorts 60 et 61 qui se détendent. Cela permet au moteur 5 de déplacer plus facilement le clapet 8 à l'encontre de la pression du fluide à l'entrée de la vanne 1.

Quand le moteur 5 déplace le clapet 8 dans le sens de l'ouverture, il doit comprimer les ressorts 60 et 61, mais le déplacement du clapet n'est alors pas contrarié par la pression du fluide.

Le ressort intérieur 61 peut être maintenu centré par une portion de guidage élargie 70 traversée par la tige 15, cette portion 70 appartenant au moteur 5 et pouvant être moulée avec l'embase de celui-ci. Le centrage du ressort extérieur 60 peut être assuré par le ressort intérieur 61.

Des joints 75, 76 s'interposent entre une portion supérieure 78 du clapet 8 engagée à l'intérieur de la partie supérieure 25 du corps 2 et la surface intérieure 79 de cette dernière, pour empêcher la remontée du fluide vers le moteur 5.

De par la présence des joints s'interposant entre la portion supérieure 78 du clapet 8 et la surface intérieure, cylindrique de révolution, de l'embout fileté 300 de la partie supérieure 25, vissé dans la partie de base 20, les ressorts 60 et 61 sont isolés de la veine fluide qui circule entre l'entrée 22 et la sortie 23.

Le clapet 8 peut porter un segment de guidage 109. Le joint 76 peut être un joint à lèvres, comme illustré, et le joint 75 un joint torique.

Le moteur 5 est relié par des conducteurs 80 à la carte électronique 4. Cette dernière porte des bornes de connexion 85, qui traversent la paroi supérieure 88 du capot 31. Un écrou 110 peut être fixé sur cette paroi supérieure, entre les bornes 85, pour la fixation d'un connecteur (non représenté).

La carte électronique 4 est par exemple fixée à la paroi supérieure 88 par des vis engagées dans des plots 89 moulés avec celle-ci.

Les bornes 85 sont par exemple au nombre de 4, comme illustré.

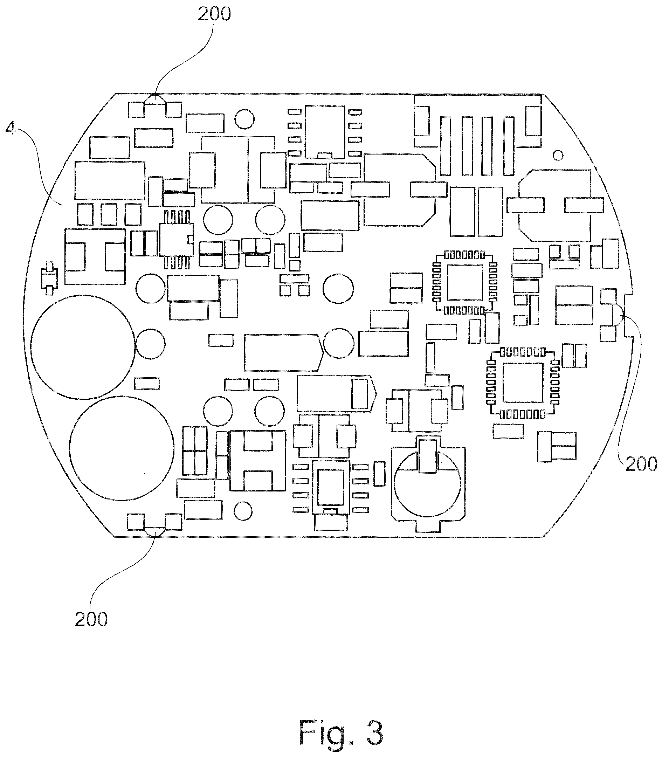

La carte électronique 4 porte des voyants lumineux 200, comme illustré à la figure 3, qui visent à signaler l'état de fonctionnement de la vanne 1. Par exemple, selon l'état de la vanne, les voyants 200 s'allument avec des couleurs différentes et l'allumage peut s'effectuer en continu ou de façon intermittente, selon par exemple que la vanne a atteint l'état ouvert ou fermé ou gagne cet état.

Le capot 31 est réalisé dans une matière plastique non opaque, qui permet de voir à travers elle l'état et la couleur des voyants.

Ces derniers sont par exemples des LEDs bicolores connectées électriquement en parallèle à un circuit intégré de commande porté par la carte 4.

Les voyants 200 sont répartis sur le pourtour de la carte électronique 4, de telle sorte que quelle que soit l'orientation de la carte 4 relativement au corps de vanne 2, la visibilité de l'un au moins des voyants 200 reste bonne.

Cela permet d'éviter, comme mentionné plus haut, la nécessité de placer un voyant lumineux de façon centrale et proéminente sur le dessus de la tête 3 et de réserver cette zone aux bornes 85, en profitant de la présence de la carte 4 au-dessus du moteur 5. On obtient ainsi une configuration particulièrement compacte et pratique d'utilisation. Lors de l'installation de la vanne 1, la tête 3 peut être tournée autour de l'axe X et positionnée dans l'orientation convenant le mieux au branchement d'un connecteur sur les bornes 85.

Les LEDs 200 utilisés peuvent avoir un axe d'émission qui est orienté perpendiculairement à l'axe X.

Les LEDs 200 sont par exemple fixées du même côté de la carte 4 que les autres composants électroniques, c'est-à-dire vers le moteur 5.

Le capot 31 peut présenter deux méplats 290 sur sa paroi latérale 288, qui facilitent sa préhension pour entraîner la tête 3 en rotation.

Bien entendu, l'invention n'est pas limitée à l'exemple qui vient d'être décrit en référence aux figures.

Par exemple, l'élément élastique 50 externe au corps de vanne peut être remplacé par un élément élastique intégré au moteur 5, au clapet 8 ou à la tige d'actionnement 15.

Le nombre de voyants 200 peut être limité à 2 ou être supérieur à 3.

## Revendications

1. Vanne motorisée (1), comportant une tige d'actionnement (15) entraînée par un moteur électrique (5) et reliée à un clapet mobile (8) pouvant prendre une position ouverte et une position fermée où le clapet repose sur un siège (10) contre la pression d'un liquide, le clapet (8) étant sollicité contre son siège (10) par le moteur électrique (5) et au moins un organe de rappel élastique pré-contraint (60 ; 61) d'assistance à la fermeture, la vanne comportant un corps de vanne (2) et une tête (3) logeant le moteur électrique (5) d'actionnement du clapet (8), mobile relativement au corps (2) entre lesdites positions, **caractérisée par** la tête (3) étant rotative par rapport au corps (2).

2. Vanne selon la revendication 1, comportant un ressort hélicoïdal (60) disposé autour de la tige d'actionnement (15) pour solliciter le clapet (8) dans sa position fermée.

3. Vanne selon la revendication 2, comportant un deuxième ressort (61), coaxial au premier (60), disposé à l'intérieur de celui-ci, pour ajouter une force supplémentaire de rappel.

4. Vanne selon la revendication 3, les deux ressorts (60 ; 61) étant hélicoïdaux et de pentes inverses.

5. Vanne selon l'une quelconque des revendications 1 à 4, ledit au moins un organe de rappel élastique (60 ; 61) étant situé en dehors d'une veine fluide parcourant la vanne.

6. Vanne selon l'une quelconque des revendications précédentes, comportant un élément (50) élastiquement déformable, disposé de façon à être sollicité en déformation lorsque le clapet (8) vient en butée contre son siège (10), de façon à compenser toute dilatation thermique tendant à écarter le clapet de son siège.

7. Vanne selon la revendication 6, l'élément (50) étant disposé de façon à retenir axialement la tête (3) sur le corps (2) tout en lui permettant de tourner relativement au corps.

8. Vanne selon la revendication 6 ou 7, l'élément (50) étant une rondelle formant ressort, de préférence de type rondelle Belleville, engagée autour d'un corps (2) de la vanne, étant de préférence retenue dans une gorge (55) de celui-ci.

9. Vanne selon l'une quelconque des revendications 1 à 8, la tête (3), reliée à un corps (2) de vanne, portant sur sa face opposée au corps (2) des bornes (85) de connexion électrique.

10. Vanne selon la revendication 9, comportant une carte électronique (4) de commande du moteur (5), disposée au-dessus de celui-ci quand la vanne (1) est observée avec le corps (2) en bas.

11. Vanne selon l'une quelconque des revendications 1 à 10, comportant plusieurs indicateurs lumineux (200) d'état de fonctionnement, disposés à distance les uns des autres et délivrant la même information.

12. Vanne selon l'une quelconque des revendications précédentes, les indicateurs (200) étant disposés sensiblement à 120° les uns des autres autour de l'axe (X) de rotation de la tête (3).

13. Vanne selon l'une des revendications 11 et 12, la tête (3) comportant un capot (31) réalisé en une matière non opaque, recouvrant les indicateurs lumineux (200).

14. Vanne selon l'une quelconque des revendications 11 à 13, les indicateurs lumineux (200) étant portés par une carte électronique (4) de commande du moteur (5).

## Patentansprüche

1. Motorbetriebenes Ventil (1), umfassend eine Betätigungsstange (15), die von einem Elektromotor (5) angetrieben wird und mit einer beweglichen Klappe (8) verbunden ist, die eine geöffnete Position einnehmen kann und eine geschlossene Position, in der die Klappe gegen den Druck einer Flüssigkeit auf einem Sitz (10) ruht, wobei die Klappe (8) durch den Elektromotor (5) und mindestens ein vorgespanntes elastisches Rückstellorgan (60; 61) zur Unterstützung beim Schließen gegen ihren Sitz (10) belastet wird, wobei das Ventil einen Ventilkörper (2) umfasst und einen Kopf (3), der den Elektromotor (5) zur Betätigung der Klappe (8) aufnimmt, die in Bezug auf den Körper (2) zwischen jenen Positionen beweglich ist, **dadurch gekennzeichnet, dass** der Kopf (3) in Bezug auf den Körper (2) drehbar ist.

2. Ventil nach Anspruch 1, umfassend eine Schraubenfeder (60), die um die Betätigungsstange (15) herum angeordnet ist, um die Klappe (8) in ihrer geschlossenen Position zu belasten.

3. Ventil nach Anspruch 2, umfassend eine zweite Feder (61), die zur ersten (60) koaxial ist und in deren Inneren angeordnet ist, um eine zusätzliche Rückstellkraft hinzuzufügen.

4. Ventil nach Anspruch 3, wobei die beiden Federn (60; 61) Schraubenfedern sind und entgegengesetzte Neigungen haben.

5. Ventil nach einem der Ansprüche 1 bis 4, wobei das mindestens eine elastische Rückstellorgan (60; 61) außerhalb eines das Ventil durchströmenden Fluidstroms gelegen ist.

6. Ventil nach einem der vorhergehenden Ansprüche, umfassend ein elastisch verformbares Element (50), das so angeordnet ist, dass es auf Verformung belastet wird, wenn die Klappe (8) gegen ihren Sitz (10) in Anschlag gelangt, so dass jede Wärmedehnung, die dazu tendiert, die Klappe von ihrem Sitz zu beabstanden, kompensiert wird.

7. Ventil nach Anspruch 6, wobei das Element (50) so angeordnet ist, dass es den Kopf (3) axial auf dem Körper (2) hält und ihm gleichzeitig ermöglicht, in Bezug auf den Körper zu drehen.

8. Ventil nach Anspruch 6 oder 7, wobei das Element (50) ein Federring ist, bevorzugt von der Art einer Tellerfeder, die um einen Körper (2) des Ventils herum eingesetzt ist, wobei sie bevorzugt in einer Nut (55) des Körpers gehalten wird.

9. Ventil nach einem der Ansprüche 1 bis 8, wobei der mit einem Ventilkörper (2) verbundene Kopf (3) auf seiner zum Körper (2) entgegengesetzten Seite Stromanschlussklemmen (85) trägt.

10. Ventil nach Anspruch 9, umfassend eine Leiterplatte (4) zur Steuerung des Motors (5), die über diesem angeordnet ist, wenn das Ventil (1) mit dem Körper (2) unten betrachtet wird.

11. Ventil nach einem der Ansprüche 1 bis 10, umfassend mehrere Leuchtmelder (200) für den Betriebszustand, die im Abstand voneinander angeordnet sind und die gleiche Information ausgeben.

12. Ventil nach einem der vorhergehenden Ansprüche, wobei die Melder (200) im Wesentlichen um 120° voneinander um die Drehachse (X) des Kopfes (3) herum angeordnet sind.

13. Ventil nach einem der Ansprüche 11 und 12, wobei der Kopf (3) eine Kappe (31) umfasst, die aus einem nicht undurchsichtigen Material ausgeführt ist und die Leuchtmelder (200) abdeckt.

14. Ventil nach einem der Ansprüche 11 bis 13, wobei die Leuchtmelder (200) von einer Leiterplatte (4) zur Steuerung des Motors (5) getragen werden.

## Claims

1. Motorized valve (1), comprising an actuation stem (15) that is driven by an electric motor (5) and is connected to a mobile obturator (8) that can adopt an open position and a closed position, the obturator resting on a seat (10) against the pressure of a liquid, the obturator (8) being urged against its seat (10) by the electric motor (5) and at least one preloaded elastic return member (60; 61) for assisting closing, the valve comprising a valve body (2) and a head (3) that houses the electric motor (5) for actuating the obturator (8), this being able to move relative to the body (2) between said positions, **characterized by** the head (3) being able to rotate relative to the body (2).

2. Valve according to Claim 1, comprising a coil spring (60) arranged around the actuation stem (15) to urge the obturator (8) into its closed position.

3. Valve according to Claim 2, comprising a second spring (61), coaxial with the first (60), arranged inside the latter in order to add an additional return force.

4. Valve according to Claim 3, the two springs (60; 61) being coil springs of opposite handedness.

5. Valve according to any one of Claims 1 to 4, said at least one elastic return means (60; 61) being located outside a fluid duct that passes through the valve.

6. Valve according to any one of the preceding claims, comprising an elastically deformable element (50) that is arranged so as to be made to deform when the obturator (8) comes into abutment against its seat (10) so as to compensate for any thermal expansion that would tend to move the obturator away from its seat.

7. Valve according to Claim 6, the element (50) being arranged so as to axially retain the head (3) on the body (2) while allowing it to rotate relative to the body.

8. Valve according to Claim 6 or 7, the element (50) being a washer that forms a spring, preferably of the Belleville washer type, that is engaged around a body (2) of the valve, being preferably retained in a channel (55) thereof.

9. Valve according to any one of Claims 1 to 8, the head (3), connected to a valve body (2), bearing electrical connection terminals (85) on its face oriented away from the body (2).

10. Valve according to Claim 9, comprising an electronic card (4) for controlling the motor (5), this card being arranged above the motor when the valve (1) is viewed with the body (2) at the bottom.

11. Valve according to any one of Claims 1 to 10, comprising multiple luminous operating state indicators (200) arranged at a distance from one another and providing the same information.

12. Valve according to any one of the preceding claims, the indicators (200) being arranged at approximately 120° from one another about the axis (X) of rotation of the head (3).

13. Valve according to either of Claims 11 and 12, the head (3) comprising a cover (31) that is made of a non-opaque material and covers the luminous indicators (200).

14. Valve according to any one of Claims 11 to 13, the luminous indicators (200) being borne by an electronic card (4) for controlling the motor (5).
